# EUROPEAN PATENT SPECIFICATION

(11) **EP 2 990 677 B1**
(45) Date of publication and mention of the grant of the patent: **18.07.2018**
(21) Application number: 15182876.1
(22) Date of filing: 28.08.2015
(51) Int. Cl.: F16D 3/84

(54) **SEAL STRUCTURE WITH FRONT SCRAPING FEATURE WHICH PREVENTS SEPARATION IN SLIDING SET MEMBERS OF CARDAN SHAFTS**
DICHTUNGSSTRUKTUR MIT FRONTSCHABMERKMAL, DAS TRENNUNG IN EINEM GLEITENDEN SATZ VON KARDANWELLEN VERHINDERT
STRUCTURE D'ÉTANCHÉITÉ AVEC CARACTÉRISTIQUE DE RACLAGE AVANT QUI EMPÊCHE LA SÉPARATION DANS DES ÉLÉMENTS D'UN ENSEMBLE COULISSANT D'ARBRES À CARDAN

(30) Priority: 29.08.2014 TR 201410151
(43) Date of publication of application: 02.03.2016
(73) Proprietor: Tirsan Kardan Sanayi Ve Ticaret Anonim Sirketi, 45030 Manisa (TR)
(72) Inventor: KORUK, ADNAN, 45030 Manisa (TR); BASARAN, AYÇA, 45030 Manisa (TR); DIZLEK, EREN, 45030 Manisa (TR); ÖZGÜRLER, HÜSEYIN, 45030 Manisa (TR); TASAN, KORKUT, 45030 Manisa (TR); ÖZBAKI , MURAT, 45030 Manisa (TR); SEN, ONUR, 45030 Manisa (TR)
(74) Representative: Yamankaradeniz, Kemal

(56) References cited:
- EP-A1- 2 366 913
- WO-A2-2008/057060
- US-A- 3 633 383
- US-A- 3 942 336
- US-A- 4 592 556

## Description

### Technical Field

The invention relates to a structure developed on the sliding set located on the sliding section of the cardan shaft.

The invention especially relates to a structure located on the sliding set of the cardan shaft which provides protection and sealing of sliding set against possible external materials (snow, ice, mud, dust) and which prevents separation of the sliding set members from each other.

### State of the Art

Cardan shafts are transmission elements used for actuating the movement of a vehicle by transmitting the rotational movement and the power produced in the engine of the motor vehicles to the differential of the vehicle from the engine or the gearbox. The yoke shaft and sleeve yoke are the cardan shaft members which operate reciprocally and synchronously and which constitute the sliding set of the cardan shaft. While the yoke shaft has a male spline form on its external diameter, sleeve yoke has female spline form on its internal diameter. The torque received from the engine is transmitted by means of these spline forms which reciprocally complete one another.

It is very important to conserve the grease located between the sliding spline male profile and sliding spline female profile which operate in contact with each other. Failing this, abrasions and distortions due to friction occur between the parts that operate in contact. This decreases the life time.

In the prior art, seals are used in said sliding sets in order to prevent the grease from leaking out of the sliding section and to prevent the materials such as snow, ice, dust and stone from getting into the sliding section. Moreover, in the vehicles that operate under heavy climate and operating conditions, the need for scraping the snow-ice and dust-mud from the section subjected to external environment of the cardan shaft is more apparent. However, in the event that the seal application is not reliable, the foreign materials may create abrasions in the group by entering the system and thus, cause noise and vibrations.
Moreover, in cardan shafts, it is expected that the sliding members slide on each other in an axial direction but not get out of each other. The detachment of the sliding members from each other during the assembly of the cardan shaft or during shipment or service replacement may result in risky situations. Moreover, combination of different teeth while reassembling the cardan shaft may cause imbalances or similar undesired situations. Studies regarding prevention of detachment of the sealing member and the sliding set members from each other were conducted before, however, there are inadequacies in the state of the art. One such example is WO2008/057060 which discloses the preamble of claim 1. The documents found in the research conducted regarding the state of the art are stated below and their disadvantages are specified.
In the patent application No. US3942336 (A) titled "Slide coupling for Cardan joint shafts", sealing feature is provided by a sealing member having a low friction coefficient in cardan shafts, and having scraping and sealing features. However, the sealing member is insufficient for an effective scraping due to its structure. Moreover, this application does not comprise a structure developed for preventing the detachment of the sliding set, therefore, a structure preventing the separation between the sliding yoke and the sliding yoke shaft is not mentioned.
In the patent application No. US5299982 (A) titled "Slip joint seal for a driveshaft", a seal located on a slot formed at the head of the sliding yoke is disclosed. In order to provide sealing feature, said seal comprises a single lip. Therefore, a reliable structure could not be achieved. Moreover, the seal does not provide any feature regarding the prevention of separation. This application is inadequate in solving the problems in the state of the art.
In the patent application No. 2010/01681 titled "A protective embodiment at the sealing felts used in the drive shaft sliding sets ", a protective structure constructed for increasing the service life of the seal used in the sliding set which provides axial movement in cardan shafts is disclosed. However, a structure designed to prevent the separation of the sliding set members as our invention is not disclosed in this patent. Moreover, the present invention does not have a lip functioning for scraping. There is a protective sheet functioning as protection for the seals inside against direct impacts. The lip in our invention providing front scraping feature provides protection by preventing direct damage to the lips inside from external elements such as stone and mud.

As a result, due to the drawbacks mentioned above and the inadequacy of the existing solutions, a development in the related technical field is required.

### Objects of the Invention

In order to eliminate the disadvantages mentioned above and to introduce new advantages to the related technical field, the invention relates to a sealing structure for cardan shaft sliding set which has a front feature and which prevents separation.

The main object of the invention is to prevent foreign materials (mud, snow, ice etc.) from getting between the sliding set members which provide axial movement in cardan shafts, to provide the sealing necessary for conserving the grease therein and to prevent separation of the members constituting the sliding set from each other, by means of a developed sealing structure which has a front scraping feature and which prevents detachment and separation of sliding set members in cardan shafts.

The invention comprises a front scraping lip which provides scraping of foreign materials such as dust, mud, snow and ice that may come from external environment in cardan shafts with sliding sets consisting of sleeve yoke and yoke shaft and which assists the two lips located inside in their operation; a stopper lip (stoper) which is elongated reversely to the front scraping lip, which provides conservation of the grease inside and which prevents separation of the female and male spline profiles from each other in the sliding set; and two lips which are elongated in the same direction with the front scraping lip and which prevents foreign materials such as snow, ice and dust by scraping in order to protect the sliding set of the cardan shaft against external factors.

The structural and characteristic features and all the advantages of the present invention will be more clearly understood thanks to the figures below and the detailed description written with reference to those figures. Therefore, the evaluation needs to be done by taking said figures and the detailed description into consideration.

### Figures for a Better Understanding of the Invention

Figure 1: It is the assembled view of the sleeve yoke and the yoke shaft forming the cardan shaft. A protective cover is placed on the shaft.
Figure 2: The view of the A-A cross section of the assembled structure given in Figure 1.
Figure 3: It is the close-up cross sectional view of the region in which the sealing structure according to the invention which has a front scraping feature and which prevents separation of the members in sliding set is located.
Figure 4: It is the view of the seal complete members located in the protective cover.

### Part References

10. Cardan Shaft
11. Sleeve yoke
12. Yoke shaft
13. Protective cover
14. Seal bearing
15. Sliding spline male profile
16. Sliding spline female profile
20. Sealing structure
21. Seal complete
22. Stopper form
23. Stopper lip
24. First lip
25. Second lip
26. Front scraping lip
27. Additional sheet
28. Protective sheet
29. Protective cover sheet fold

### Detailed Description of the Invention

In this detailed description, the preferred embodiments of the sealing structure (20) for the sliding set of the cardan shaft which has a snow, ice, dust front scraping feature and which prevents separation and detachment of the sliding members according to the present invention are described only for the subject to be understood better without any limiting effect.

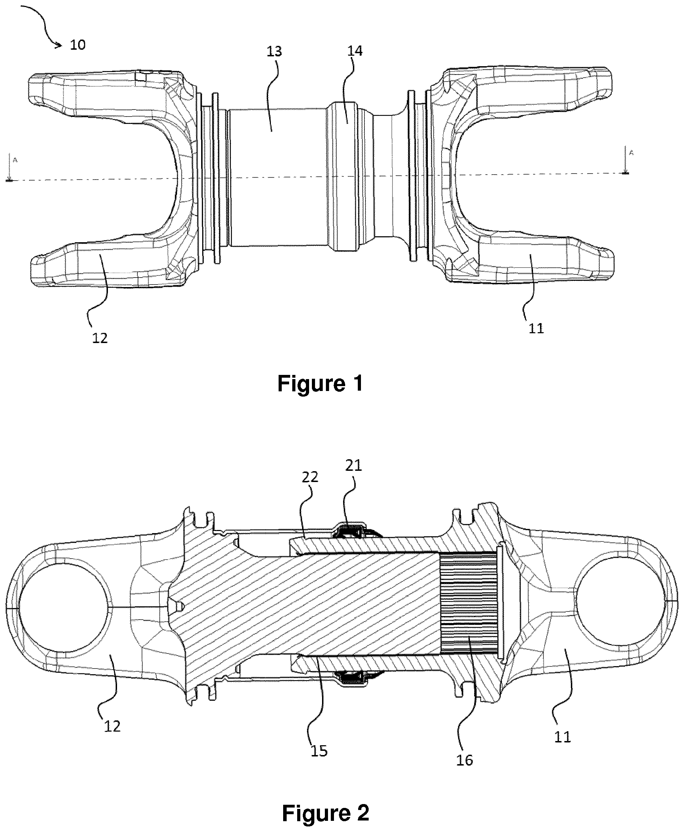

Figure 1 provides the assembled view of the sleeve yoke (11) and the yoke shaft (12) composing the sliding set of the cardan shaft (10), and Figure 2 provides the A-A cross sectional view of said assembled structure. There is the protective cover (13) on said cardan shaft (10) sliding set. Seal bearing (14) is formed on the sleeve yoke (11) side of said protective cover (13). Inside said seal bearing (14), sealing complete (21) which has the feature of front scraping, sealing and also preventing the separation and detachment of sleeve yoke (11) and the yoke shaft (12), is located.

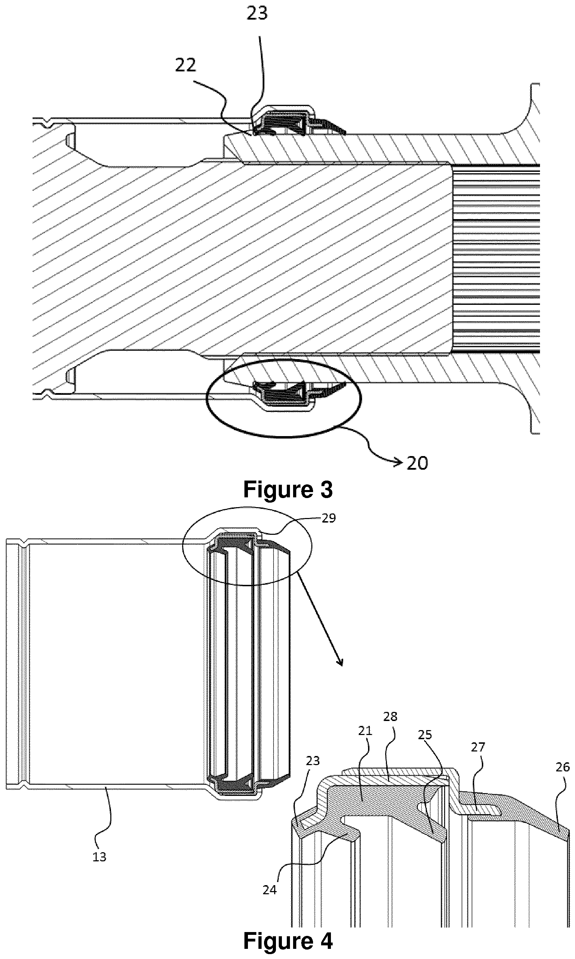

In Figure 3, the close-up cross sectional view of the region in which the sealing structure (20) preventing the detachment of the female and male members of the sliding set and having front scraping feature for the sliding set is shown and in Figure 4, the detail view of the seal complete (21) is given. Said seal complete (21) comprises a first lip (24) and a second lip (25) which provides scraping of external factors such as dust, snow, ice, stone and mud; a front scraping lip (26) on the same direction of these lips providing a front scraping before these lips; and a stopper lip (stopper) (23) which provides conservation of the grease inside the sliding set and prevention of said grease from leaking out and which prevents detachment of the sliding set from one another. The stopper lip (23) is elongated reversely to the first (24), second (25) and front scraping lips (26). There are also a protective sheet (28) and additional sheet (27) located on the seal complete (21) inside the seal bearing. The rigidity of the stopper lip (stopper) (23) is increased by said protective sheet (28). An end of said additional sheet (27) is connected with the front scraping lip (26). The front scraping lip (26) will come across possible foreign factors received from external environment and scrape these off from the sleeve yoke (11). Thus, it has a much rigid structure than all the other lips comprised on the seal complete.

A stopper form (22) is formed on the sleeve yoke (11) on the side of the seal complete (21). Said stopper form (22) is the part which prevents the detachment of the sliding members by coming into contact with the stopper lip (23) as a result of the sliding movement.

Axial movement is provided over the spline geometry between the sleeve yoke (11) and the yoke shaft (12) forming the cardan shaft (10) and the sliding spline male profile (15) and the sliding spline female profile (16) move both towards and away from each other. The sliding is completed after a movement of a specific opening length. Detachment of sliding set members is prevented by the contact of the stopper lip (23) to the stopper form (22). Said seal complete (21) is connected with the protective cover (13) and said protective cover (13) is connected with the yoke shaft (12). This way, as the back and forth movement is generated, the first lip (24), the second lip (25) and the front scraping lip (26) located on the seal complete (21) will be scraping the sleeve yoke (11). Subsequent to the assembling of the seal complete (21), with the protective cover sheet fold (29) formed by folding the end of the protective cover (13), detachment of the seal complete (21) from its bearing is prevented.

Said front scraping lip (26) is preferably made of polyurethane.

## Claims

1. A cardan shaft (10) having a sliding set sealing structure (20) comprising a first lip (24) and a second lip (25) which provide scraping of cardan shaft (10), a sleeve yoke (11) with spline form on the internal diameter and stopper form (22) on the end of the external surface, a yoke shaft (12) with spline form on the external diameter and a protective cover (13) located on said yoke shaft (12), **characterized in that** said sliding set sealing structure (20) further comprises:
- a rigid front scraping lip (26) with front scraping feature on one end, which contacts with said sleeve yoke (11) and which has a much rigid structure than said first lip (24) and said second lip (25),
- an additional sheet (27) connected with the front scraping lip (26) from said additional sheet's end, said additional sheet (27) being located inside a seal bearing (14) formed on the sleeve yoke (11) side of said protective cover (13), where said first lip (24) and said second lip (25) are also located inside said seal bearing (14).

2. The cardan shaft (10) according to Claim 1, **characterized in that** the sliding set sealing structure (20) further comprises on the other end, a stopper lip (23) which is elongated reversely to the first lip (24), the second lip (25) and the front scraping lip (26) and which prevents detachment of said sleeve yoke (11) and yoke shaft by coming into contact with said stopper form (22).

## Patentansprüche

1. Kardanwelle (10) mit einer Gleitdichtungsstruktur (20), umfassend eine erste Lippe (24) und eine zweite Lippe (25), die ein Schaben an der Kardanwelle (10) bereitstellen, eine Gleitbacke (11) mit Keilform am Innendurchmesser und einer Stopperform (22) am Ende der äußeren Oberfläche, einer Backenwelle (12) mit Keilform am Außendurchmesser und einer Schutzabdeckung (13) an der Backenwelle (12), **dadurch gekennzeichnet dass** die Gleichdichtungsstruktur (20) ferner umfasst:
- eine starre vordere Schablippe (26) mit einem vorderen Schabelement an einem Ende, die die Gleitbacke (11) berührt und eine viel starrere Struktur als die erste Lippe (24) und die zweite Lippe (25) aufweist,
- eine zusätzliche Fläche (27), die vom Ende der zusätzlichen Fläche an mit der vorderen Schablippe (26) verbunden ist, wobei sich die zusätzliche Fläche (27) in einem an der Seite der Gleitbacke (11) der Schutzabdeckung (13) gebildeten Dichtungslager (14) befindet, wobei sich die erste Lippe (24) und die zweite Lippe (25) ebenfalls im Dichtungslager (14) befinden.

2. Kardanwelle (10) nach Anspruch 1, **dadurch gekennzeichnet, dass** die Gleitdichtungsstruktur (20) ferner am anderen Ende eine Stopperlippe (23) umfasst, die umgekehrt zur ersten Lippe (24), zur zweiten Lippe (25) und der vorderen Schablippe (26) verlängert ist und die verhindert, dass die Gleitbacke (11) und die Backenwelle durch Kontakt zur Stopperform (22) entfernt werden.

## Revendications

1. Arbre à cardan (10) muni d'une structure d'étanchéité à ensemble coulissant (20) comprenant une première lèvre (24) et une deuxième lèvre (25) assurant le raclage de l'arbre à cardan (10), un étrier à manchon (11) avec forme cannelée sur le diamètre intérieur et forme d'obturation (22) sur le bout de la surface extérieure, un arbre d'étrier (12) avec forme cannelée sur le diamètre extérieur et un revêtement protecteur (13) situé sur ledit arbre d'étrier (12), **caractérisé en ce que** ladite structure d'étanchéité à ensemble coulissant (20) comprend en outre :
- une lèvre de raclage antérieur rigide (26) avec dispositif de raclage antérieur à un bout, entrant en contact avec ledit étrier à manchon (11), et dont la structure est beaucoup plus rigide que ladite première lèvre (24) et ladite deuxième lèvre (25),
- une feuille additionnelle (27) raccordée à la lèvre de raclage antérieur (26) depuis le bout de ladite feuille additionnelle, ladite feuille additionnelle (27) étant située à l'intérieur d'un support de joint (14) formé sur le côté d'étrier à manchon (11) dudit revêtement protecteur (13), la première lèvre (24) et la deuxième lèvre (25) étant également situées à l'intérieur dudit support de joint (14).

2. Arbre à cardan (10) selon la revendication 1, **caractérisé en ce que** la structure d'étanchéité à ensemble coulissant (20) comprend en outre, sur l'autre bout, une lèvre d'obturation (23) allongée dans le sens inverse à la première lèvre (24), à la deuxième lèvre (25) et à la lèvre de raclage antérieur (26), et empêchant le détachement dudit étrier à manchon (11) et l'entrée en contact de l'arbre d'étrier avec ladite forme d'obturation (22).
